# EUROPÄISCHE PATENTSCHRIFT

(11) **EP 1 737 135 B1**
(45) Veröffentlichungstag und Bekanntmachung des Hinweises auf die Patenterteilung: **18.05.2011**
(21) Anmeldenummer: 05014924.4
(22) Anmeldetag: 09.07.2005
(51) Int. Cl.: H04B 1/38, H04M 1/60

(54) **Auto-Telefonanlage**
Car telephone installation
Installation téléphonique pour automobile

(30) Priorität: 21.06.2005 DE 102005029690
(43) Veröffentlichungstag der Anmeldung: 27.12.2006
(73) Patentinhaber: Henryk Bury Mielec Sp.zo.o., 39-300 Mielec (PL); Bentley Motors Limited, Crewe Cheshire CWI 3PL (GB)
(72) Erfinder: Bollmann, Eckhard, 32609 Hüllhorst (DE); Wilson, Trevor, Dr., Crewe Cheshire CW1 3PL (GB)
(74) Vertreter: Lins, Edgar

(56) Entgegenhaltungen:
- EP-A- 1 058 220
- US-A- 5 649 316
- US-A1- 2001 021 640
- US-A1- 2003 224 840

## Beschreibung

Die Erfindung betrifft eine Auto-Telefonanlage mit einem Telefonmodul, das mit einer Sende- und -Empfangsantenne verbindbar ist und eine Telefon-Sende- und -Empfangs-Einheit aufweist, die mit einer drahtlosen Daten- und Signalübertragungseinheit versehen ist, über die benutzerspezifische Daten von einem Mobiltelefon auf die Telefon-Sende- und -Empfangs-Einheit übertragbar sind:

Insbesondere in höherwertigen Fahrzeugen sind Auto-Telefonanlagen installiert, deren Bedienung und Steuerung in eine zentrale Einheit zur Steuerung auch eines Autoradios, einer Navigationsanlage, eines Bordcomputers usw integriert ist. Diese zentrale Bedien- und Steuereinheit ist mit den entsprechenden Geräten regelmäßig über einen elektronischen Steuerungs- und Kommunikations-Bus des Fahrzeugs verbunden. Über diesen Steuerungsbus werden auch fahrzeug- und sicherheitsrelevante Daten übertragen, beispielsweise Signale, die die Betätigung des Gaspedals oder des Bremspedals widerspiegeln.

Es ist bekannt, die Telefonanlage mit einem eigenen Telefon auszustatten, das mit einer Fahrzeugantenne und mit einem im Fahrzeug eingebauten Mikrofon und mit Lautsprechern verbunden ist, um so ein Telefonieren im Freisprechmodus, d. h. ohne die Notwendigkeit, das Telefon zu halten, zu ermöglichen. Eine derartige Anlage ist sehr aufwendig und erfordert regelmäßig die Anmeldung des Autotelefons als weiteres Mobiltelefon zusätzlich zu einem tragbaren Mobiltelefon, das der Autobenutzer in aller Regel bereits mit sich trägt. Einige Mobilfunk-Provider sehen die Möglichkeit vor, das installierte Autotelefon mit einer zum Vertrag des tragbaren Mobiltelefons gehörenden Zweitkarte zu ver-wenden, sodass die Abrechnung der über das Autotelefon geführten Gespräche über den für das tragbare Mobiltelefon abgeschlossenen Vertrag erfolgen kann.

Insbesondere für nachrüstbare Auto-Telefonanlagen ist es bekannt, in das Fahrzeug eine Telefonsteuerbox einzubauen und diese mit einem Halter zu verbinden, in den ein tragbares Mobiltelefon einsteckbar ist. Der Halter kann dabei so ausgebildet sein, dass er eine Verbindung des Mobiltelefons mit einer Fahrzeugantenne herstellt, sodass während des Telefonierens die am Mobiltelefon befindliche Antenne abgeschaltet bleiben kann. Das Gespräch wird dann über das in den Halter eingesteckte Mobiltelefon abgewickelt. Da dabei relativ viel Strom des Akkumulators des Mobiltelefons verbraucht wird, sind die Halter regelmäßig mit einer Ladevorrichtung für das Mobiltelefon ausgestattet. Gemäß US 5,649,316 ist der Halter dabei zusätzlich über ein Kabel mit einem Hörer verbunden über den das Telefonat des Mobiltelefons ebenfalls geführt werden kann. Darüber ist die Fahrzeugantenne versteckt im Fahrzeug angeordnet, beispielsweise innerhalb des Innen-Rückspiegels.

Zunehmend sind Mobiltelefone im Gebrauch, die über eine Sende- und Empfangseinrichtung für Daten und Audiosignale verfügen, wobei die Übermittlung im Allgemeinen nach einem Standard, dem Bluetooth-Standard erfolgt. Wenn die im Fahrzeug eingebaute Steuerungsbox und das Mobiltelefon jeweils über eine derartige Sende- und Empfangseinrichtung verfügen, kann die Funktion des Mobiltelefons von der Steuerungsbox bzw. von der zentralen Bedieneinrichtung des Fahrzeugs gesteuert werden, indem die Steuersignale über die drahtlose Verbindung auf das Mobiltelefon übertragen werden. Umgekehrt werden vom Mobiltelefon Audiosignale drahtlos übermittelt und erlauben die Durchführung des Telefongesprächs über die Sende- und Empfangseinrichtung des Mobiltelefons, jedoch mit den entsprechenden Einrichtungen im Fahrzeug, beispielsweise eine Freisprecheinrichtung oder ein Kopfhörer/Mikrofon-Set. Die Audiosignale werden mit dem Bluetooth-Standard dementsprechend mit einem HFP-Signal (Hands Free Profile) oder einem HSP-Signal (Head Set Profile) übermittelt. Diese Lösung ist bequem, da keine Halterung für das Mobiltelefon vorgesehen werden muss und eine entsprechende Installation im Fahrzeug unterbleiben kann. Nachteilig ist jedoch, dass die Sende- und Empfangseinrichtung des Mobiltelefons mit der Antenne des Mobiltelefons verwendet wird, sodass die Sendestrahlung in einer gewissen Stärke im Fahrzeuginnenraum auftritt. Ferner ist nachteilig, dass in diesem Modus eine hohe Strombelastung für das Mobiltelefon auftritt, sodass dem Ladezustand des Mobiltelefons eine erhöhte Aufmerksamkeit gewidmet werden muss, was in der Praxis häufig unterbleibt.

US 2003/0224840 A1 bzw. DE 100 45 303 A1 offenbaren eine Auto-Telefonanlage der eingangs erwähnten Art, bei der das Telefonmodul als komplettes Autotelefon mit einer Telefon-Sende- und -Empfangs-Einheit aufgebaut ist, wobei das Telefonmodul in erster Linie zum selbständigen Aussenden von Notrufen vorgesehen ist. Darüber hinaus können über das Telefonmodul Telefonate mit einem Mobilfunkgerät geführt werden, wenn das Mobilfunkgerät seine benutzerspezifischen Daten über eine drahtlose, kurzreichweitige Funkverbindung, insbesondere nach dem Bluetooth-Standard, auf eine Steuerung des Telefonmoduls überträgt und die Steuerung das Mobiltelefon als autorisiert erkennt, weil die Daten bereits im Speicher des Steuergeräts abgelegt sind. Findet eine derartige Autorisierung statt, sendet das Telefonmodul und/oder das betreffende Mobiltelefon eine Nachricht an den Server des Mobilfunknetzes, sodass danach alle für das Mobiltelefon bestimmten Telefonate mit einer Rufumleitung auf das Telefonmodul gesandt werden. Hierzu muss das Telefonmodul eigene SIM-Daten aufweisen. Die Übertragung der SIM-Daten des Mobiltelefons auf die Steuerung des Telefonmoduls erfolgt daher ausschließlich zum Zwecke der Autorisierung durch das Telefonmodul, wodurch die Rufumleitung initiiert werden kann.

US 2001/0021640 A1 (entsprechend EP 1 128 690 A1) offenbart ein System bei dem ein in einem Kraftfahrzeug installiertes Autotelefon drahtlos SIM-Daten eines Mobiltelefons erhält, wenn das Mobiltelefon sich im kurzreichweitigen Funkbereich einer Bluetooth-Übertragung befindet. Sind die SIM-Daten des Mobiltelefons von dem Autotelefon empfangen worden, fungiert das Autotelefon als Schnittstelle für das Mobiltelefon, sodass vom Mobiltelefon ausgehend Telefonate über die Funkverbindung des Autotelefons mit dem Mobilfunknetz erfolgen. Ebenso werden eingehende Telefonate für das Mobiltelefon von dem Autotelefon empfangen und über die Bluetooth-Verbindung auf das Mobiltelefon weitergeleitet. Sowohl das Autotelefon als auch das Mobiltelefon können mit einer SIM-Karte ausgestattet sein.

EP 1 058 220 A1 offenbart ein Kommunikationssystem für ein Fahrzeug, bei dem eine zentrale Kommunikationsplattform vorgesehen wird, um einerseits eine Verbindung zu einem Steuerbus (CAN-Bus) des Kraftfahrzeugs und andererseits Verbindungen zu einem Kommunikations-Bus (MOST-Bus), herzustellen. Die Kommunikationsplattform sieht darüber hinaus mehrere Funkkanäle vor, mit denen drahtlos verschiedene Geräte gesteuert werden können. An die Kommunikationsplattform kann sowohl ein Hörer (Handset) eines Autotelefons als auch ein Handy anschließbar sein, wobei bei angeschlossenem Handy anstelle von dessen Sendeempfänger ein leistungsstärkerer, fahrzeugseitiger Sendeempfänger genutzt werden kann. Das Kommunikationsmodul enthält eine eigene Telematik-SIM-Karte, die von einem SIM-Kartenleser lesbar ist. Wenn über eine Bluetooth-Schnittstelle ein Handy angeschlossen wird, funktioniert dieses wie ein normaler Telefonhörer (Handset). Nähere Erläuterungen hierzu enthält diese Druckschrift nicht.

Durch das vorbenutzte Fahrzeug Lancia Lybra Executive ist es bekannt, einen Kartenleser für eine Auto-Telefonanlage im Mittelkonsolenbereich des Armaturenbretts anzuordnen.

Der vorliegenden Erfindung liegt die Aufgabe zugrunde, eine Auto-Telefonanlage der eingangs erwähnten Art so auszubilden, dass sie ohne Abschluss eines eigenen Mobilfunkvertrages benutzt werden kann, eine bequeme Handhabung für unterschiedliche Typen von Mobiltelefonen ermöglicht und dabei keinen Eingriff in die Steuerung des Fahrzeugs für den zentralen Steuerungs-Bus benötigt.

Zur Lösung dieser Aufgabe ist erfindungsgemäß eine Auto-Telefonanlage der eingangs erwähnten Art dadurch gekennzeichnet, dass das Telefonmodul zum Anschluss an einen zentralen Steuerungs-Bus des Fahrzeugs anschließbar und von einer zentralen Steuerung über den Steuerungs-Bus steuerbar ist, dass eine separate Steuerungseinheit unmittelbar mit der Telefon-Sende- und -Empfangs-Einheit zur Organisation der drahtlosen Kommunikation zwischen der Telefon-Sende- und -Empfangs-Einheit und dem Mobiltelefon unmittelbar verbunden ist und dass die Telefon-Sende- und -Empfangs-Einheit ferner mit einem separaten Kartenleser verbunden ist, der die benutzerspezifischen Daten einer Speicherkarte aus dem Mobiltelefon erkennt und auf das mit Abstand von dem Kartenleser angeordnete Telefonmodul überträgt, das sich mit diesen Daten im Mobilfunknetz anmeldet.

Die erfindungsgemäße Auto-Telefonanlage sieht somit vor, dass die benutzerspezifischen Daten des Mobiltelefons, zu denen auch die Zugangsdaten zum Mobilfunknetz gehören, von dem Mobiltelefon drahtlos auf die Telefon-Sende- und -Empfangs-Einheit übertragen werden. Diese Möglichkeit ist grundsätzlich bekannt und erfolgt regelmäßig nach einem Standard, dem rSAP-Standard. Dabei wird die Telefonfunktion des sendenden Mobiltelefons abgeschaltet, sobald die die benutzerspezifischen Daten emp-fangende Telefon-Sende- und - Empfangs-Einheit sich mit diesen Daten im Mobilfunknetz angemeldet hat. Solange die drahtlose Verbindung zwischen der Telefon-Sende- und -Empfangs-Einheit und dem Mobiltelefon besteht, werden somit alle abgehenden und ankommenden Gespräche mit der Telefon-Sende- und -Empfangs-Einheit des Telefonmoduls durchgeführt. Die drahtlose Verbindung (Bluetooth-Standard) mit dem Mobiltelefon wird dabei lediglich dazu ausgenutzt, auf benutzerspezifische Daten auf der entsprechenden Speicherkarte (SIM-Karte) des Mobiltelefons zuzugreifen.

Wenn das Telefonmodul der erfindungsgemäßen Auto-Telefonanlage somit mit einem Mobiltelefon kommuniziert, das, beispielsweise nach dem rSAP-Standard, die benutzerspezifischen Daten einschließlich von Zugangsdaten übermitteln kann, wird das Telefonmodul diese Daten aufnehmen und sich mit diesen Daten im Mobilfunknetz anmelden.

Solange sich das Mobiltelefon in der Kommunikations-Reichweite für die drahtlose Kommunikation (Bluetooth) befindet, bleibt das Telefonmodul der Auto-Telefonanlage aktiv. Wird das Mobiltelefon aus dem Kommunikationsbereich des Telefonmoduls entfernt, meldet sich das Telefonmodul ab, sodass das tragbare Mobiltelefon wieder aktiviert wird.

Die vorliegende Erfindung trägt der Tatsache Rechnung, dass nur ein gewisser Anteil der im Markt befindlichen Mobiltelefone in der Lage ist, die benutzerspezifischen Daten drahtlos auf eine andere Telefon-Sende- und -Empfangs-Einheit zu übertragen (rSAP-Fähigkeit). Demgemäß ist bei der erfindungsgemäßen Auto-Telefonanlage vorgesehen, einen separaten Kartenleser für eine die benutzerspezifischen Daten aus dem Mobiltelefon enthaltenden Speicherkarte (SIM-Karte) vorzusehen. Der Kartenleser ist dabei separat von der Telefon-Sende- und -Empfangs-Einheit angeordnet, und ermöglicht somit, dass der Kartenleser in einem Zugriffsbereich des Fahrers positioniert wird. Regelmäßig befindet sich das Telefonmodul mit der Telefon-Sende- und -Empfangs-Einheit außerhalb des Zugriffsbereichs des Fahrers, weil, insbesondere in höherwertigen Fahrzeugen, im Zugriffsbereich des Fahrers sehr viele Geräte und Bedienelemente untergebracht sind und für die Telefon-Sende- und -Empfangs-Einheit günstigere Platzierungsmöglichkeiten im Fahrzeug vorhanden sind, beispielsweise im Bereich der Heckscheibe, wo die Telefon-Sende- und -Empfangs-Einheit bequem mit einer beispielsweise in die Heckscheibe integrierten Fahrzeug-Antenne verbindbar ist. Die separat von dem Telefonmodul vorgesehene Anordnung des Karteniesers ermöglicht beispielsweise dessen Platzierung in der Mittelkonsole zwischen Vordersitzen des Fahrzeugs, wo die entsprechende SIM-Karte gut zugänglich und dennoch mechanisch geschützt in den Kartenleser eingeführt werden kann.

In diesem Fall ist der Abstand zwischen dem Kartenleser und der Telefon-Sende- und -Empfangs-Einheit größer als 1 m und kann durchaus etwa 3 m betragen. Dabei erfordert die erforderliche fehlerfreie Übertragung der benutzerspezifischen Daten, insbesondere der Zugangsdaten zum Mobilfunknetz, eine sorgfältige Aufbereitung der Daten im Kartenleser, sodass diese auch bei Störeinflüssen fehlerfrei übertragen werden können.

Die erfindungsgemäß vorgesehene Kommunikation der Telefon-Sende- und -Empfangs-Einheit mit dem Mobiltelefon, beispielsweise über den Bluetooth-Standard, erfordert einen Kennenlern-Schritt ("Pairing"). Das Pairing muss von der Telefon-Sende- und -Empfangs-Einheit aus initialisiert werden, sodass ein Steuerungsvorgang des Telefonmoduls erforderlich ist. Die Steuerung des Telefonmoduls erfolgt über den zentralen Steuerungs-Bus des Fahrzeugs. Eine Besonderheit der äußerst sicherheitsrelevanten Kommunikation über den Steuerungs-Bus des Fahrzeugs besteht darin, dass über den Steuerungs-Bus nur solche Signale geleitet werden dürfen und können, die ihrer Art nach bis zum Entwicklungsabschluss des Steuerungs-Bus vereinbart worden sind. Demgemäß werden regelmäßig die für die Steuerung der Bluetooth-Datenkommunikation erforderlichen Steuersignale im Steuerungs-Bus eines Fahrzeugtyps nicht vorgesehen sein. Eine hierfür erforderliche Änderung der vereinbarten Kommunikation auf dem Steuerungs-Bus würde aber einen hohen Aufwand erfordern, da die Änderung der Kommunikation auf dem Steuerungs-Bus erst dann freigegeben werden kann, wenn ausführlich getestet worden ist, ob hierdurch sicherheitsrelevante Funktionen des Fahrzeugs (Bremsvorgang o. ä.) nicht beeinträchtigt werden. Zur Vermeidung dieses Aufwands ist erfindungsgemäß daher vorgesehen, eine separate Steuerungseinheit mit der Telefon-Sende- und -Empfangs-Einheit unmittelbar zu verbinden, um damit die Organisation der drahtlosen Kommunikation zwischen der Telefon-Sende- und -Empfangs-Einheit und dem Mobiltelefon zu ermöglichen. Zu dieser Organisation der Kommunikation gehört die Durchführung des Pairings und die Zuordnung eines Erkennungscodes für das Mobiltelefon, für das das Pairing bereits durchgeführt worden ist. Ferner muss die separate Steuerungseinheit erkennen, ob ein mit der Telefon-Sende- und -Empfangs-Einheit bereits "gepairtes" Mobiltelefon innerhalb der Kommunikationsreichweite anzutreffen ist und welches Mobiltelefon den Vorrang erhält, wenn mehrere der betreffenden Telefon-Sende- und -Empfangs-Einheit zugeordnete Mobiltelefone sich im Kommunikationsbereich aufhalten. Für die Steuerungseinheit wird ferner eine Priorität für eine manuell eingesetzte SIM-Karte vergeben, sodass beim Einstecken einer SIM-Karte in den Kartenleser eine rSAP-Kommunikation mit Mobiltelefonen unterbunden wird. Ist keine SIM-Karte in den Kartenleser eingesteckt, wird die Steuerungseinheit die Telefon-Sende- und -Empfangs-Einheit veranlassen, im Kommunikationsbereich nach Mobiltelefonen zu suchen, mit denen eine drahtlose Datenkommunikationsverbindung herstellbar ist.

Der separate Kartenleser kann vorzugsweise in der separaten Steuerungseinheit untergebracht sein. Auch diese kann somit beispielsweise in der Mittelkonsole des Fahrzeugs installiert sein.

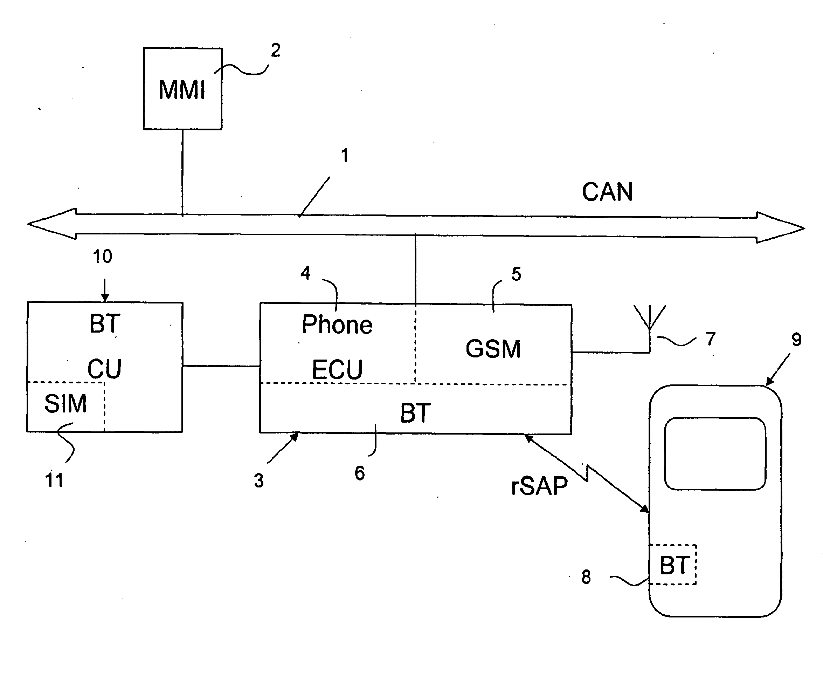

Ein Ausführungsbeispiel der Erfindung ist in der beigefügten Zeichnung schematisch dargestellt.

An einem zentralen Steuerungsbus 1, der im Allgemeinen ein CAN-Bus ist, ist eine zentrale Steuerung 2 (MMI) als zentrale Infotainment-Steuerung angeschlossen. Über den Steuerungsbus 1 wird ein Telefonmodul 3 gesteuert, das eine elektronische Telefon-Steuereinheit 4, eine Telefon-Sende- und -Empfangs-Einheit 5 (GSM) und eine drahtlose Daten- und Signalübertragungseinheit 6 (BT) aufweist. Die Telefon-Sende- und -Empfangs-Einheit 5 ist mit einer Fahrzeugantenne 7 verbunden.

Die drahtlose Daten- und Signalübertragungseinheit 6 kann mit einer entsprechenden drahtlosen Daten- und Signalübertragungseinheit 8 eines tragbaren Mobiltelefons 9 kommunizieren und dabei benutzerspezifische Daten, nach dem rSAP-Standard, austauschen. Die drahtlose Kommunikation zwischen den drahtlosen Daten- und Signalübertragungseinheiten 6 und 8 erfordert ein "Pairing", das durch eine an das Telefonmodul 3 angeschlossene separate Steuerungseinheit 10 gesteuert wird. Sind die benutzerspezifischen Daten des Mobiltelefons 9, die auf einer SIM-Karte des Mobiltelefons abgespeichert sind, auf das Telefonmodul 3 übertragen worden, findet der Telefonbetrieb nunmehr ausschließlich über das Telefonmodul 3 der Auto-Telefonanlage statt. Die rSAP-Kommunikationsverbindung mit dem Mobiltelefon 9 bleibt jedoch aufrecht erhalten, beispielsweise um auf weitere spezifische Daten auf der SIM-Karte des Mobiltelefons 9 zurückgreifen zu können. Ferner stellt die fortwährende Kommunikationsverbindung zwischen Telefonmodul 3 und Mobiltelefon 9 das Kriterium dafür dar, dass der Telefonbetrieb über das Telefonmodul 3 abwickelbar ist. Wird das Mobiltelefon 9 aus dem Kommunikationsbereich des Telefonmoduls 3 entfernt, wird das Telefonmodul 3 im Mobilfunknetz abgemeldet, sodass der weitere Telefonbetrieb dann nur noch über das Mobiltelefon 9 möglich ist.

Da viele tragbare Mobiltelefone im Markt sind, die nicht rSAP-fähig sind, weist die Steuerungseinheit 10 einen Kartenleser 11 für SIM-Karten auf. Dieser ermöglicht insbesondere die Verwendung von so genannten Twin-Karten. Dabei werden für einen Mobilfunkvertrag zwei Karten für dieselbe Telefonnummer und dieselben Zugangsdaten zum Mobilfunknetz ausgegeben. Wird eine Zweitkarte in den Kartenleser 11 eingesteckt, wird dadurch das Telefonmodul 3 aktiviert und - über das Mobilfunknetz - zugehörige Mobiltelefon deaktiviert, sodass ein im Prinzip ähnlicher Betrieb mit nicht rSAP-fähigen Mobiltelefonen möglich ist, wie er oben beschrieben worden ist.

Für Mobiltelefone, die zwar für eine Bluetooth-Übertragung eingerichtet, jedoch nicht rSAP-fähig sind, also die benutzerspezifischen Daten nicht übertragen können, kann die beschriebene Telefonanlage auch in der Weise benutzt werden, dass ein Telefonat mit dem Mobiltelefon, jedoch über das Telefonmodul 3 als Freisprechanlage im Hands Free Profile oder im Head Set Profile geführt wird. Über die Bluetooth-Verbindung werden in diesem Fall die Audiosignale und zugehörige Steuersignale übertragen.

## Patentansprüche

1. Auto-Telefonanlage mit einem Telefonmodul (3), das mit einer Sende- und -Empfangsantenne (7) verbindbar ist und eine Telefon-Sende- und - Empfangs-Einheit (5) aufweist, die mit einer drahtlosen Daten- und Signalübertragungseinheit (6) versehen ist, über die benutzerspezifische Daten von einem Mobiltelefon (9) auf die Telefon-Sende- und -Empfangs-Einheit (5) übertragbar sind, **dadurch gekennzeichnet, dass** das Telefonmodul (3) zum Anschluss an einen zentralen Steuerungs-Bus (1) des Fahrzeugs anschließbar und von einer zentralen Steuerung (2) über den Steuerungs-Bus (1) steuerbar ist, dass eine separate Steuerungseinheit unmittelbar mit der Telefon-Sende- und -Empfangs-Einheit (5) zur Organisation der drahtlosen Kommunikation zwischen der Telefon-Sende- und -Empfangs-Einheit (5) und dem Mobiltelefon (9) unmittelbar verbunden ist und dass die Telefon-Sende- und -Empfangs-Einheit (5) ferner mit einem separaten Kartenleser (11) verbunden ist, der die benutzerspezifischen Daten einer Speicherkarte aus dem Mobiltelefon (9) erkennt und auf das mit Abstand von dem Kartenleser (11) angeordnete Telefonmodul (3) überträgt, das sich mit diesen Daten im Mobilfunknetz anmeldet.

2. Auto-Telefonanlage nach Anspruch 1, **dadurch gekennzeichnet, dass** der Kartenleser (11) mit einem Abstand > 1 m von der Telefon-Sende- und - Empfangs-Einheit (5) angeordnet ist.

3. Auto-Telefonanlage nach Anspruch 1 oder 2, **dadurch gekennzeichnet, dass** die Telefon-Sende- und -Empfangs-Einheit (5) im Bereich einer Heckscheibe des Fahrzeugs angeordnet ist.

4. Auto-Telefonanlage nach einem der Ansprüche 1 bis 3, **dadurch gekennzeichnet, dass** der separate Kartenleser (11) im Zugriffsbereich des Fahrers des Fahrzeugs angeordnet ist.

5. Auto-Telefonanlage nach Anspruch 4, **dadurch gekennzeichnet, dass** der separate Kartenleser (11) im Bereich einer Mittelkonsole zwischen Vordersitzen des Fahrzeugs angeordnet ist.

6. Auto-Telefonanlage nach einem der Ansprüche 1 bis 5, **dadurch gekennzeichnet, dass** die separate Steuerungseinheit (10) mit dem separaten Kartenleser (11) versehen ist.

## Claims

1. Car telephone system having a telephone module (3) which can be connected to a transmitting and receiving antenna (7) and has a telephone transmitting and receiving unit (5) which is provided with a wireless data and signal transmission unit (6) which can be used to transmit user-specific data from a mobile telephone (9) to the telephone transmitting and receiving unit (5), **characterized in that** the telephone module (3), for connection, can be connected to a central control bus (1) of the vehicle and can be controlled by a central controller (2) via the control bus (1), **in that** a separate control unit is directly connected to the telephone transmitting and receiving unit (5) for the purpose of organizing wireless communication between the telephone transmitting and receiving unit (5) and the mobile telephone (9), and **in that** the telephone transmitting and receiving unit (5) is also connected to a separate card reader (11) which recognizes the user-specific data on a memory card from the mobile telephone (9) and transmits said data to the telephone module (3) which is arranged at a distance from the card reader (11) and registers with the mobile radio network using these data.

2. Car telephone system according to Claim 1, **characterized in that** the card reader (11) is arranged at a distance of > 1 m from the telephone transmitting and receiving unit (5).

3. Car telephone system according to Claim 1 or 2, **characterized in that** the telephone transmitting and receiving unit (5) is arranged in the region of a rear window of the vehicle.

4. Car telephone system according to one of Claims 1 to 3, **characterized in that** the separate card reader (11) is arranged within the vehicle driver's reach.

5. Car telephone system according to Claim 4, **characterized in that** the separate card reader (11) is arranged in the region of a center console between front seats of the vehicle.

6. Car telephone system according to one of Claims 1 to 5, **characterized in that** the separate control unit (10) is provided with the separate card reader (11).

## Revendications

1. Installation téléphonique pour automobile, comprenant un module téléphonique (3) qui peut être relié à une antenne d'émission et réception (7) et qui présente une unité d'émission et réception téléphonique (5), munie d'une unité de transmission de signal et de données (6) sans fil par l'intermédiaire de laquelle des données spécifiques à l'utilisateur peuvent être transmises depuis un téléphone mobile (9) à l'unité d'émission et réception téléphonique (5), **caractérisée en ce que** le module téléphonique (3) est raccordable à un bus de pilotage (1) central du véhicule et est pilotable depuis un pilotage central (2) par l'intermédiaire du bus de pilotage (1), **en ce qu'**une unité de pilotage distincte est reliée directement à l'unité d'émission et réception téléphonique (5) pour organiser la communication sans fil entre l'unité d'émission et réception téléphonique (5) et le téléphone mobile (9), et **en ce que** l'unité d'émission et réception téléphonique (5) est en outre reliée à un lecteur de carte (11) distinct qui identifie les données d'une carte mémoire spécifiques à l'utilisateur, provenant du téléphone mobile (9), et les transmet au module téléphonique (3) agencé à distance du lecteur de carte (11), le module téléphonique se connectant avec ces données au réseau de téléphonie mobile.

2. Installation téléphonique pour automobile selon la revendication 1, **caractérisée en ce que** le lecteur de carte (11) est agencé à une distance >1m de l'unité d'émission et réception téléphonique (5).

3. Installation téléphonique pour automobile selon la revendication 1 ou 2, **caractérisée en ce que** l'unité d'émission et réception téléphonique (5) est agencée dans la région d'une vitre arrière du véhicule.

4. Installation téléphonique pour automobile selon l'une quelconque des revendications 1 à 3, **caractérisée en ce que** le lecteur de carte (11) distinct est agencé à portée de main du conducteur du véhicule.

5. Installation téléphonique pour automobile selon la revendication 4, **caractérisée en ce que** le lecteur de carte (11) distinct est agencé dans la région d'une console centrale entre les sièges avant du véhicule.

6. Installation téléphonique pour automobile selon l'une quelconque des revendications 1 à 5, **caractérisée en ce que** l'unité de pilotage (10) distincte est munie du lecteur de carte (11) distinct.
